# EUROPEAN PATENT APPLICATION

(11) **EP 2 330 561 A1**
(43) Date of publication of application: **08.06.2011**
(21) Application number: 09290911.8
(22) Date of filing: 04.12.2009
(51) Int. Cl.: G06T 15/00

(54) **Method for browsing a 3 dimensional virtual environment**

(71) Applicant: Alcatel Lucent, 75008 Paris (FR)
(72) Inventor: Lou, Zhe, 2000 Antwerp (BE); Moons, Jan Lode Mia, 2220 Heist-op-den-Berg (BE)
(74) Representative: Narmon, Gisèle Marie Thérèse

(57) **Abstract**

The present invention relates to a Method for browsing a 3 Dimensional Virtual Environment by a client device of a user. This 3-Dimensional Virtual Environment being deployed on an application server where the 3-Dimensional Virtual Environment comprises a 3-Dimensional object with a texture displayed on the 3-Dimensional object. The user is represented in the 3-Dimensional Virtual Environment by an avatar. The method further comprises the step of determining a distance between the object and the avatar by the application server, further determining a reference of a texture for applying on the object based on the distance and a reference of the object subsequently determining the texture for applying onto the object based on the reference of the texture.

## Description

The present invention relates to method for browsing a 3-Dimensional Virtual Environment by a client device as described in the preamble of claim 1, a related system as described in the preamble of claim 3 and a related 3-Dimensional application Server as described in the preamble of claim 4.

Such a method for browsing a 3-Dimensional Virtual Environment, related system and 3-Dimensional Application Server is already well known in the art. Indeed, currently in 3-Dimensional environments (e.g. games and virtual worlds) vague textures, i.e. images, are put on an object in such a 3-Dimensional Virtual Environment when an avatar, a virtual representation of the user, is positioned relatively far away from that object. When the user's avatar approaches or comes closer to the object, a higher-resolution texture is applied onto the object, which higher resolution texture contains more details.

The texture/information that is applied onto such a 3-Dimensional object is not rich at all and the changing of texture applied onto such a 3-D-dimensional object is relatively slow.

Furthermore, the texture/information shown on top of a 3-Dimensional object in such virtual environment is static information only. When the user's avatar approaches the object, a similar image is calculated only differing in that more details of the image are calculated.

An objective of the present invention is to provide a method for browsing a 3 Dimensional Virtual Environment of the above known type but wherein the texture is applied onto the 3 dimensional object is dynamical.

According to the invention, this object is achieved by the method as described in claim 1, the system as described in claim 3, the 3-Dimensional Application server as described in claim 4, the related texture reference determination Device as described in claim 6 and the related texture vault as described in claim 9.

In this way, by first determining during the browsing the 3-Dimensional Virtual environment a distance between the user's avatar and the object by the 3-Dimensional application server, subsequently determining a reference of a texture for applying on the object based on the determined distance together with a reference of the object and finally determining the texture for applying onto the object based on the previously determined reference of the texture.

The reference of the texture may dynamically be altered in order to point to another, different or alternative texture with another theme, content or any other relevant/non-relevant texture for application onto the 3 Dimensional object.

Another characteristic feature of the present invention is described in claim 2.

The dynamic texture that is determined based on the object and the distance between the user's avatar and the object subsequently is retrieved and applied onto the 3-Dimensional object.

Another characteristic feature of the present invention is described in claim 5.

The application server by means of the dynamic texture requesting part is able to request the dynamic texture based on the texture reference received from the texture reference determination device.

Another characteristic feature of the present invention is described in claim 7 and claim 11.

The Texture reference determination Device is adapted to send the reference of the texture towards said Application server by means of a reference sending part

Another characteristic feature of the present invention is described in claim 8 and claim 10.

The texture reference determination Device alternatively is able to send the reference of the texture towards the Texture vault Device.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
Fig. 1 represents a functional representation of a first embodiment of the System for browsing a 3-Dimensional Virtual Environment 3DVE according to the present invention, and
Fig. 2 represents a functional representation of a second embodiment of the System for browsing a 3-Dimensional Virtual Environment 3DVE according to the present invention.

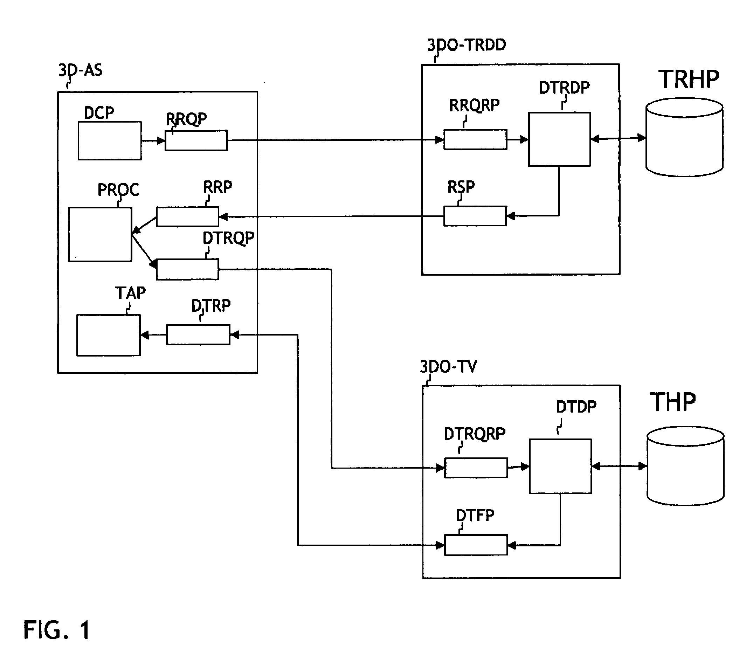

In the following paragraphs, referring to the drawing in FIG.1, an implementation of the system is described. In the second paragraph, all connections between mentioned elements are defined.

Subsequently all relevant functional means of the mentioned system as presented in FIG.1 are described followed by a description of all interconnections. In the succeeding paragraph the actual execution of the communication system is described.

A first essential element of the artifact management system according to the present invention is a client device of a user for browsing a 3-Dimensional Virtual Environment. This 3-Dimensional Virtual Environment 3DVE being deployed on an application server 3DO-AS. This 3-Dimensional Virtual Environment 3DVE comprising at least one 3-Dimensional object with a texture displayed on the 3-Dimensional object 3DO. The user browsing the 3-Dimensional Virtual Environment being represented in by an avatar where the avatar is a digital representation of the user in the 3-Dimensional environment or world.

Additionally, there is a Texture reference determination Device 3DO-TRDD that is able to determine a reference of a texture, for applying on said object, based on the distance between the 3-Dimensional object and the avatar of the user in combination with a reference of the 3-Dimensional object and a Texture vault 3DO-TV that is able to determine the texture for applying onto said object based on the reference of the texture as determined by the Texture reference determination Device 3DO-TRDD.

The client device (not shown) may be coupled to the Application server 3D-AS over an internet connection or any other suitable connection like intranet, Bluetooth, Wifi, Wimax, 3G network, etc.

The Application server 3D-AS may be coupled to both the Texture reference determination Device 3DO-TRDD and the Texture vault 3DO-TV over a intemet connection, intranet connection or any other wired or wireless connection. Wired connection can be USB, Firewire, serial-port, Ethernet, fibre or any other high speed connections. Wireless connection technologies compromise Wifi, Wimax, Bluetooth, infrared, 3G, LTE or any other high-speed wireless connections.

The Application server 3D-AS first comprises a distance calculation part DCP that is able to calculate a distance between the user's avatar and the 3-Dimensional object 3DO, a dynamic texture reference requesting part RRQP that is able to request a reference of a texture based on the distance between the user's avatar and the 3-Dimensional object and a reference of the 3-Dimensional object identifying the object itself, a reference receiving part RRP that is able to receive the reference of the 3-Dimensional Object from the Texture reference determination Device 3DO-TRDD and a processing part PROC adapted to process the received reference(s) and calculate/determine the desired reference that will be applied on to the 3D object.

Further, the Application server 3D-AS comprises a dynamic texture requesting part DTRQP that is adapted to request the dynamic texture based on the texture reference received from said dynamic texture reference determination device 3DO-TRDD, a dynamic texture reception part DTRP that is adapted to receive the dynamic texture for applying onto said 3-Dimensional object based on said reference of said texture. Finally the Application server 3D-AS includes a texture application part TAP that is adapted to apply the received texture onto the object. The received texture here is based in the object and type of object being identified by an object reference in combination with the distance between the user's avatar and a 3-dimensional object.

The dynamic texture reference requesting part RRQP of the application server 3D-AS has an input-terminal that is at the same time an input-terminal of the application server 3D-AS. The dynamic texture reference requesting part RRQP further is coupled to the distance calculation part DCP.

The reference receiving part RRP has an input-terminal that is at the same time an input-terminal of the application server 3D-AS. The reference receiving part RRP further is coupled to the processing part PROC. The processing part further is coupled to the dynamic texture requesting part DTRQP that has an output-terminal that is at the same time an output-terminal of the application server 3D-AS.

The dynamic texture reception part DTRP has an input-terminal that is at the same time an input-terminal of the application server 3D-AS and is further coupled to the texture application part TAP.

The Texture reference determination Device 3DO-TRDD first comprises a reference determination request receiving part RRQRP that is able to receive the request for determining the reference of the texture based on the distance in combination with reference of the object and further a dynamic texture reference determination part DTRDP that is adapted to determine a reference of a texture, for applying on the 3-dimensional object, based on the distance and a reference of the 3-Dimensional object. The Texture reference determination Device 3DO-TRDD additionally possesses a texture reference holding part TRHP containing a list of references with associated object-reference and distance or distance-ranges. This texture reference holding part TRHP could be implemented as a database or other database-equivalent technologies. The dynamic texture reference determination part DTRDP determines based on the distance and a reference of the 3-Dimensional object the reference of the texture to be applied onto the 3-dimensional object. The Texture reference determination Device 3DO-TRDD further comprises the reference sending part RSP that in turn is adapted to send the determined reference of the texture towards the Application server 3D-AS.

The determination request receiving part RRQRP of the Texture reference determination Device 3DO-TRDD has an input-terminal that is at the same time an input-terminal of the Texture reference determination Device 3DO-TRDD. The determination request receiving part RRQRP further is coupled to the dynamic texture reference determination part DTRDP that further is coupled to the texture reference holding part TRHP.

The dynamic texture reference determination part DTRDP is additionally coupled to the reference sending part RSP that in turn has an output-terminal that is at the same time an output-terminal of the Texture reference determination Device 3DO-TRDD.

The Texture vault 3DO-TV that holds the textures for application onto the 3-dimanesional object each associated with a texture reference comprises the following parts:
A dynamic texture reference request receiving part DTRQRP that is adapted to receive the dynamic texture reference from the Application server 3D-A; a texture determination part DTDP that is able to determine the texture for applying onto said 3-Dimensional object based on said reference of said texture, a texture holding part THP containing a list of references with associated textures. This texture holding part THP could be implemented as a database or other database-equivalent technologies.

The Texture vault 3DO-TV further comprises a dynamic texture forwarding part DTFP that is able to forward the dynamic texture towards said Application Server (3D-AS).

This forwarding part is able to stream the determined texture towards the application server 3DO-AS.

The dynamic texture reference request receiving part DTRQRP of the Texture vault 3DO-TV has an input-terminal that is at the same time an input-terminal of the Texture vault 3DO-TV. The dynamic texture reference request receiving part DTRQRP further is coupled to the texture determination part DTDP that further is coupled to the texture holding part THP.

The texture determination part DTD, additionally is coupled to the dynamic texture forwarding part DTFP that in turn has an output-terminal that is at the same time an output-terminal of the Texture vault 3DO-TV.

In order to explain the execution of the present invention it is supposed that a user is browsing a 3-dimensional virtual environment 3DVE like Second Life or Wonderland, OpenCroque, Solipsys or any other 3D virtual environments/worlds using his client device e.g. a personal computer having intemet access or a mobile terminal being coupled to the intemet over a wireless intemet connection, in both instances using a client application for browsing a 3 dimensional virtual environment 3DVE.

Now further it is supposed that this user is wandering in this 3-dimensional virtual environment 3DVE for instance the Second Life and his avatar e.g. a 3D Human-being alike object is approaching an object representing the famous Forbidden City in China. The virtual client being the Second Life client, periodically sends the coordinate of the user's avatar to the Application server 3D-AS. When the avatar reaches a certain distance, e.g. 5km away from the Forbidden City, the Application Server 3DAS detects that the Forbidden City is within certain distance of the avatar. Then the Application server by means of the distance calculation part DCP calculates the distance, now 5 km, between the avatar and the 3-Dimensional object 3DO using the coordinates of the user's avatar and the coordinates of the 3-dimensional object. This distance of 5 km is together with the object reference of the 3-dimensional object used in requesting a reference of a texture by means of the dynamic texture reference requesting part RRQP.

The reference determination request receiving part RRQRP then receives the request for determining the reference of the texture based on the distance of 5 km in combination with reference of the object. The dynamic texture reference determination part DTRDP determines the reference of the texture, for applying on the 3-dimensional object, using 5km as a distance and a reference of the 3-Dimensional object. The reference is determined by searching with distance = 5 and object reference in the texture reference holding part TRHP for finding the meant texture reference, i.e. a reference to a picture of the Forbidden City being URl _{picture of Forbidden City.} The reference sending part RSP that in turn sends the determined reference of the texture, i.e. URl _{depicture of Forbidden City} towards the Application server 3D-AS.

The Application server 3D-AS. by means of respectively the dynamic texture requesting part DTRQP requests the dynamic texture based on the texture reference URI picture of Forbidden City received from said dynamic texture reference determination device 3DO-TRDD by means of the texture reference receiving part RRP.

The Texture vault 3DO-TV subsequently, by means of the dynamic texture reference request receiving part DTRQRP, receives the dynamic texture reference, i.e. e URl _{picture of Forbidden City} from the Application server 3D-A.

The texture determination part DTDP determines in cooperation with the texture holding part THP, the corresponding dynamic texture for applying onto said 3-Dimensional object based on this URI of the picture of the Forbidden City. The texture is searched for using URl _{picture of Forbidden City} in the texture holding part THP containing a list of references with associated textures amongst others containing the picture of the Forbidden City, a slide show of the Forbidden city, a historical view of the Forbidden City, a video clip of the Forbidden City, a weather forecast of the next several days, etc.

The texture determination part DTDP retrieves the picture of the Forbidden City and sends the picture by means of the dynamic texture forwarding part DTFP towards the Application Server 3D-AS.

Finally, the dynamic texture receiving part receives the forwarded texture and subsequently the texture application part of the Application server 3D-AS applies the received texture, i.e. the picture of the Forbidden City onto the 3-diamensional object.

If the user's avatar continues in approaching the Forbidden City and reaches for instance 4km, the same message flow applies. This time, based on the distance of 4 km and the same object reference respectively the URl _{slideshow Forbidden} City is determined and based on this URl the texture "slideshow of Forbidden City is determined" from the texture holding part DTHP and subsequently retrieved there from.

The slideshow of Forbidden City is applied onto the 3 Dimensional Object and the slide is shown with many pictures of the Forbidden City which is retrieved using URI slides how Forbidden City which is stored in the texture holding part.

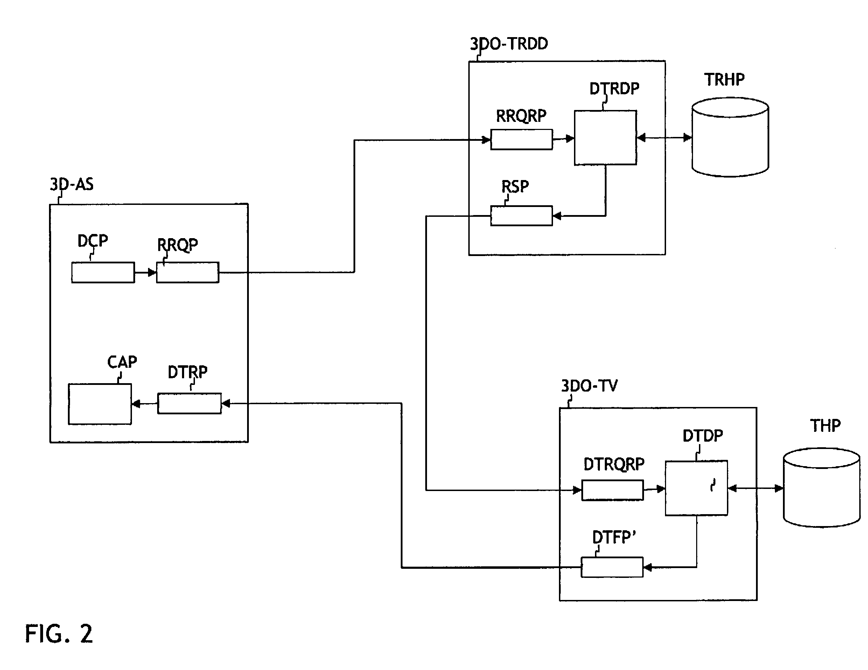

An alternative embodiment is shown in Fig. 2. This embodiment is described by referring to the differences with the first embodiment which is that the reference sending part PSP of the Texture reference determination Device 3DO-TRDD is coupled directly to the dynamic texture request receiving part DTRRQRP of the Texture vault 3DO-TV.

The texture reference determined by means of the dynamic texture reference determination part is forwarded immediately towards the Texture vault 3DO-TV instead of towards the Application server 3D-AS. Subsequently the texture determined based on the reference may be forwarded directly towards the application server or alternatively via the Texture reference determination Device 3DO-TRDD.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks nence is not given.

While the principles of the invention have been described above in connection with specific apparatus, it is to be clearly understood that this description is merely made by way of example and not as a limitation on the scope of the invention, as defined in the appended claims.

## Claims

1. Method for browsing a 3 Dimensional Virtual Environment (3DVE) by a client device of a user, said 3-Dimensional Virtual Environment being deployed on an application server (3D-AS), said 3-Dimensional Virtual Environment comprising a 3-Dimensional object with a texture displayed on said 3-Dimensional object, said user being represented in said 3-Dimensional Virtual Environment by an avatar, **CHARACTERISED IN THAT** said method further comprises the step of:
a. determining a distance between said object and said avatar by said application server (3D-AS): and
b. determining a reference of a texture for applying on said object based on said distance and a reference of said object; and
c. determining said texture for applying onto said object based on said reference or said texture.

2. Method for browsing a 3-Dimensional Virtual Environment (3DVE) according to claim 1, **CHARACTERISED IN THAT** said method further comprises the step of retrieving said texture and applying said texture onto said 3-Dimensional object (3DO).

3. System for browsing a 3-Dimensional Virtual Environment (3DVE) by a client device of a user, said 3-Dimensional Virtual Environment (3DVE) being deployed on an application server, said 3-Dimensional Virtual Environment (3DVE) comprising a 3 Dimensional object with a texture displayed on said 3-Dimensional object, said user being represented in said 3-Dimensional Virtual Environment (3DVE) by an avatar, **CHARACTERISED IN THAT** said system further comprises:
a. a distance calculation module (DCP), adapted to calculate a distance between said avatar and said object (3DO);
b. a dynamic texture reference determination module (DTRDP), adapted to determine a reference of a texture for applying on said object based on said distance and a reference of said 3-Dimensional object (3DO); and
c. a texture determination module (DTDP), adapted to determine said texture for applying onto said 3-Dimensional object based on said reference of said texture.

4. Application server (3D-AS) for use in a system according to claim 3, **CHARACTERISED IN THAT** said Application server (3D-AS) comprises:
a. a distance calculation part (DCP) adapted to calculate a distance between said avatar and said 3-Dimensional object (3DO);
b. a dynamic texture reference requesting part (RRQP), adapted to request a reference of a texture based on said distance and a reference of said 3-Dimensional object; and
c. a dynamic texture reception part (DTRP), adapted to receive said dynamic texture for applying onto said 3-Dimensional object based on said reference of said texture.

5. Application server (3D-AS) according to claim 4, **CHARACTERISED IN THAT** said Application server (3D-AS) further comprises:
d. a dynamic texture requesting part (DTRQP), adapted to request said dynamic texture based on said texture reference received from said texture reference determination device (3DO-TRDD).

6. Texture reference determination Device (3DO-TRDD) for use in a system according to claim 3, **CHARACTERISED IN THAT,** said Texture reference determination Device (3DO-TRDD) comprises said dynamic texture reference determination part (DTRDP), adapted to determine a reference of a texture, for applying on said object, based on said distance and a reference of said 3-Dimensional object

7. Texture reference determination Device (3DO-TRDD) according to claim 6, **CHARACTERISED IN THAT** said Texture reference determination Device (3DO-TRDD) further comprises a reference sending part (RSP), adapted to send said reference of said texture towards said Application server (3D-AS).

8. Texture reference determination Device (3DO-TRDD) according to claim 6, **CHARACTERISED IN THAT** said Texture reference determination Device (3DO-TRDD) further comprises a reference sending part (RSP), adapted to send said reference of said texture towards said Texture vault Device (3DO-VS).

9. Texture vault (3DO-TV) for use in a system according to claim 3, **CHARACTERISED IN THAT,** said Texture vault comprises said texture determination part (DTDP), adapted to determine said texture for applying onto said 3-Dimensional object based on said reference of said texture.

10. Texture vault (3DO-TV) according to claim 9, **CHARACTERISED IN THAT,** said Texture vault (3DO-TV) further comprises a dynamic texture reference request receiving part (DTRQRP) adapted to receive said dynamic texture reference from said Texture reference determination Device (3DO-TRDD).

11. Texture vault (3DO-TV) according to claim 9, **CHARACTERISED IN THAT,** said Texture vault (3DO-TV) further comprises a dynamic texture reference request receiving part (DTRQRP) adapted to receive said dynamic texture reference from said Application server (3D-AS).

12. Texture vault (3DO-TV) according to claim 9, **CHARACTERISED IN THAT,** said Texture vault (3DO-TV) further comprises a dynamic texture forwarding part (DTFP), adapted to forward said dynamic texture towards said Application Server (3D-AS).
